# EUROPEAN PATENT SPECIFICATION

(11) **EP 3 576 103 B1**
(45) Date of publication and mention of the grant of the patent: **25.12.2024**
(21) Application number: 17894424.5
(22) Date of filing: 24.01.2017
(51) Int. Cl.: G21D 3/04, H04L 12/46, H04L 45/24

(54) **NUCLEAR POWER PLANT PRIORITY MANAGEMENT SYSTEM**
SYSTEM ZUR VERWALTUNG DER PRIORITÄT EINES KERNKRAFTWERKS
SYSTÈME DE GESTION DE PRIORITÉ DE CENTRALE NUCLÉAIRE

(43) Date of publication of application: 04.12.2019
(73) Proprietor: China Techenergy Co., Ltd, Beijing 100094 (CN); China General Nuclear Power Corporation (CGN), Shenzhen, Guangdong 518027 (CN)
(72) Inventor: JIANG, Guojin, Beijing 100094 (CN); CHENG, Kang, Beijing 100094 (CN); QI, Min, Beijing 100094 (CN); SHI, Guilian, Beijing 100094 (CN); ZUO, Xin, Beijing 100094 (CN); ZHANG, Chunlei, Beijing 100094 (CN); GAO, Chao, Beijing 100094 (CN); ZHOU, Fei, Beijing 100094 (CN); YANG, Wenyu, Beijing 100094 (CN)
(74) Representative: Beck & Rössig European Patent Attorneys
(86) International application number: PCT/CN2017/072490
(87) International publication number: WO 2018/137142

(56) References cited:
- EP-A1- 3 316 261
- WO-A1-2016/209114
- CN-A- 101 995 844
- CN-A- 102 543 226
- CN-A- 104 409 123
- CN-A- 106 875 992
- US-B1- 6 473 479
- YONG SUK SUH ET AL: "Developing architecture for upgrading I&C systems of an operating nuclear power plant using a quality attribute-driven design method", NUCLEAR ENGINEERING AND DESIGN, AMSTERDAM, NL, vol. 241, no. 12, 14 September 2011 (2011-09-14), pages 5281 - 5294, XP028126360, ISSN: 0029-5493, [retrieved on 20110919], DOI: 10.1016/J.NUCENGDES.2011.09.027
- "IEEE Standard Criteria for Accident Monitoring Instrumentation for Nuclear Power Generating Stations;IEEE Std 497-2016 (Revision of IEEE Std 497-2010)", IEEE STANDARD, IEEE, PISCATAWAY, NJ, USA, 29 July 2016 (2016-07-29), pages 1 - 36, XP068110511
- LIO BA-CHENG ET AL: "Application of FPGA in Nuclear Power Plant DCS Safety PLM", COMPUTER KNOWLEDGE AND TECHNOLOGY, vol. 9, no. 11, 30 January 2013 (2013-01-30), pages 2718 - 2721,2728, XP009515412, ISSN: 1009-3044
- GUO CHUN: "Design Analysis of Digital Reactor Protection System between Ningde and Tianwan NPP ", ELECTRIC POWER SIENCE AND ENGENEERING , vol. 26, no. 7, 31 July 2010 (2010-07-31), pages 20 - 24, XP009515413, ISSN: 1672-0792

## Description

### TECHNICAL FIELD

The present disclosure relates to safety control technology of a nuclear power plant (NPP), in particular to an NPP, especially a priority management system (PMS) of a non-safety system.

### BACKGROUND ART

The PMS is an interface management device between field devices and a digital instrument control system as well as other systems in NPP, mainly used to manage priorities of instructions sent by each system or device so as to ensure safe operation of NPP. Existing PMSs have strong customization features and low engineering applicability. Typically, a PMS only has hard-wired interfaces, or its communication interfaces merely support a safety class communication interface, or otherwise the communication interfaces only support a non-safety class communication interface. Therefore, a large number of hard-wired interfaces are needed to convert the communication safety class, when device level manual control instructions are received from a non-safety class system or a safety class system.

As mentioned in CN104409123A, when a hard-wired approach is used in a PMS, the PMS receives instructions directly from ESFAC (Engineered Safety Features Actuation Cabinets), SRC (Safety Related cabinets), DAC (Diverse Actuation cabinets), SA I&C (Severe Accident I&C cabinets) and SAC (Safety Automation cabinets) in an NPP. The instructions are output through a priority management module and a drive control module, and a drive device for driving a field actuator collects feedback information of the field actuator, supports self-diagnosis functions, supports periodic testing of the safety system, and transmits information such as the feedback information of the field actuator, the diagnosis results and periodic test results to the DCS system of the nuclear power plant. The electrical and instrument control systems for nuclear power plants are divided into three classes: safety class (1E), safety related class (SR) and non-safety class (NC). Priority module design should be different from digital systems to avoid common cause failure (CCF); a common cause failure refers to a failure of two or more structures, systems or components due to a specific single event or cause. Therefore, the priority module should be independent of the digital system and its function cannot be affected by the digital system.

Among them, especially when the PMS receives manual device control instructions from non-safety systems, a large amount of hardwire is connected across non-safety class plants and safety class plants, with a long distance and a large quantity and occupying cabinet space. As a result, implementation for the project is extremely inconvenient.

WO2016/209114A1 describes an enhancement of a NPP safety system reliability and protection against common cause failures by means of constructing safety features and normal operation features based on different software and hardware platforms. US6473479B1 describes a communication network for NPP protection system that provides means for exchanging information between redundant plant protection system channels and engineered safety feature trains. Y. Suk Suh et al. describe in "Developing architecture for upgrading I&C systems of an operating nuclear power plant using a quality attribute-driven design method", Nuclear Engineering and Design 241 (2011) pp. 5281-5294 the architecture for upgrading the instrumentation and control systems of a Korean standard NPP as an operating NPP.

### SUMMARY OF INVENTION

The object of the present disclosure is to provide a PMS in an NPP, so that it is convenient for the system to receive control instructions from systems for various safety classes to avoid a large number of hard-wired connections, thereby ensuring favorable engineering applicability of the system.

According to an embodiment of the present disclosure, a nuclear power plant priority management system is provided. The nuclear power plant priority management system includes a priority management device, the priority management device being connected with hard-wired interfaces and a safety class instruction interface. The priority management device is further connected with a non-safety class communication interface through the hard-wired interfaces, and the non-safety class communication interface is configured for connecting with a non-safety class system and receiving non-safety class device level control instructions from the non-safety class system.

Optionally, the non-safety class communication interface includes at least two identical transceivers, the at least two transceivers being connected with the non-safety class system and being configured for receiving the non-safety class device level control instructions from the non-safety class system.

Optionally, the non-safety class communication interface further includes a communication connection module, the communication connection module being connected between a hard-wired interface corresponding to the non-safety class communication interface and the at least two transceivers, and being configured for transmitting the non-safety class device level control instructions received from one of the at least two transceivers to the priority management device via the corresponding hard-wired interface.

Optionally, the non-safety class communication interface further includes a communication conversion module, the communication conversion module being connected between a hard-wired interface corresponding to the non-safety class communication interface and the communication connection module, and being configured for converting a format of the non-safety class device level control instructions received from the communication connection module to a corresponding format of the corresponding hard-wired interface and transmitting he format converted non-safety class device level control instructions to the priority management device through the corresponding hard-wired interface.

Optionally, the non-safety class communication interface further includes a communication protocol module, which is connected between the communication conversion module and the communication connection module, and is configured for transmitting the non-safety class device level control instructions received from the communication connection module to the communication conversion module according to a set communication protocol.

Optionally, the priority management device is further connected with the non-safety class communication interface through a feedback module for transmitting feedback signals in one direction.

Optionally, at least one of the hard-wired interfaces and the safety class instruction interface is provided with a signal isolation unit for electrical isolation and/or communication isolation of signals.

Optionally, the priority management device is further connected with a first priority logic module and a second priority logic module, the first priority logic module and the second priority logic module being connected with an execution device; the priority management device outputs control instructions to the execution device via one of the first priority logic module and the second priority logic module.

Optionally, the priority management system further includes a safety self-diagnosis device; the safety self-diagnosis device includes an output drive loop detection module connected with the priority management device, the output drive loop detection module includes a voltage detection module and/or a current detection module connected with the priority management device as well as a pulse generation module (61) connected with the priority management device (10), the voltage detection module (62) and/or a current detection module (63) also being connected with the output control module (52) which is connected between the first priority logic module (50) as well as the second priority logic module (51) and the execution device (80); and/or, the safety self-diagnosis device includes a fault collection and diagnosis module connected with the priority management device.

Optionally, the priority management system further includes an indicator light, which is connected with the priority management device and is configured for indicating a working status of the priority management device.

The priority management system for a nuclear power plant according to embodiments of the present disclosure, by integrating hard-wired interfaces, a safety class communication interface and a non-safety class communication interface on the priority management device as communication interfaces of the priority management system, makes it convenient for the system to receive control instructions from different safety class systems, helpful to improve engineering applicability of the system. Non-safety communication interfaces can be directly connected to a non-safety class system and redundant communication links are established to ensure stable reception of non-safety class device level control instructions. With the hard-wired interfaces, stable transmission of the non-safety class device level control instructions is ensured, with no requirements of connecting a large amount of hardwire, so that usability of the system in engineering implementation is greatly improved.

### BRIEF DESCRIPTION OF ACCOMPANYING DRAWINGS

FIG. 1 is a structural diagram illustrating a nuclear power plant priority management system according to an embodiment of the present disclosure;
FIG. 2 is a structural diagram illustrating a non-safety class communication device in a nuclear power plant priority management system according to an embodiment of the present disclosure;
FIG. 3 is a structural diagram illustrating an output drive loop detection module in a nuclear power plant priority management system according to an embodiment of the present disclosure.

### DESCRIPTION OF THE REFERENCE NUMBERALS

10 - priority management device; 20 - hard-wired interface; 30 - safety class instruction interface; 31 - safety class system; 40 - non-safety class communication interface; 41 - non-safety class system; 42 - transceiver; 43 - communication connection module; 44 - communication protocol module; 45 - communication conversion module; 46 - feedback module; 50 - first priority logic module; 51 - second priority logic module; 52 - output control module; 60 - safety self-diagnosis device; 61 - pulse generation module; 62 - voltage detection module; 63 - current detection module; 70 - indicator light; 80 - execution device.

### DETAILED DESCRIPTIONS OF EMBODIMENTS

Specific embodying modes of the present disclosure are further described in detail below with reference to the accompanying drawings and embodiments, wherein like elements are indicated with like reference numerals throughout the drawings. The following embodiments are provided for purposes of explaining the present disclosure, not for limiting the scope of the present disclosure.

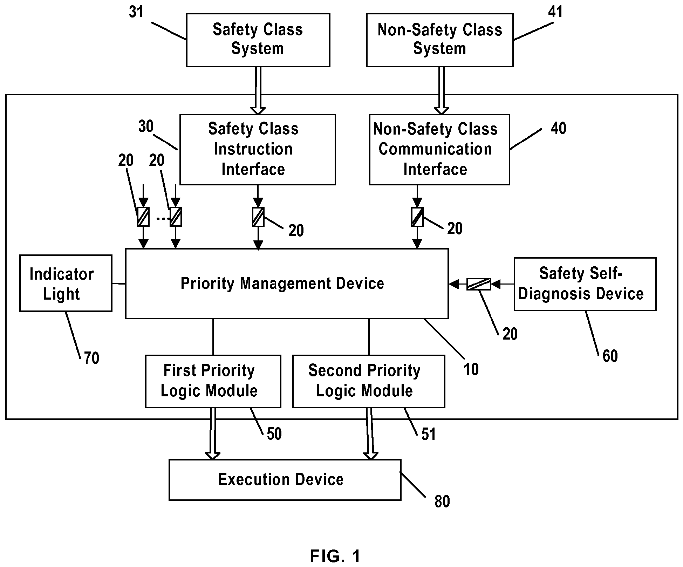

FIG. 1 is a structural diagram illustrating a nuclear power plant priority management system according to an embodiment of the present disclosure. Communication interfaces of the nuclear power plant priority management system include hard-wired interfaces, a safety class communication interface, and a non-safety class communication interface. These communication interfaces facilitate in receiving device level manual control instructions from safety class systems and non-safety class systems, with no requirements of connecting a large amount of hardwire. Accordingly, favorable engineering applicability of the priority management is ensured, and engineering application requirements can be met for priority management systems of various types of nuclear power plants.

As shown in FIG. 1, the nuclear power plant priority management system of an embodiment of the present disclosure includes a priority management device 10, on which hard-wired interfaces 20, a safety class instruction interface 30, and a non-safety class communication interface 40 are integrated. The non-safety class communication interface 40 is connected with the priority management device 10 via the hard-wired interfaces 20, and the non-safety class communication interface is configured for connecting with a non-safety class system 41, for receiving non-safety class device level control instructions from the non-safety class system 41 and for transmitting the non-safety class device level control instructions to the priority management device 10 via the hard-wired interfaces 20.

Having the hard-wired interfaces 20, the safety class instruction interface 30 and the non-safety class communication interface 40 integrated on the priority management device 10 is equivalent to the priority management system having communication interfaces or communication input ends with hard-wired interfaces and supporting both safety class communication and non-safety class communication. By connecting a respective interface to a system of a corresponding class in the nuclear power plant, control instructions can be received directly, with no need for conversion on safety classes in communication connections, so that connecting a large amount of hardwire can be avoided, and usability in engineering implementation of priority management systems can be effectively improved. In particular, the non-safety class communication interface 40 can directly communicate with the non-safety class system 41 and receive the non-safety class device level control instructions from the non-safety class system 41. In comparison with conventional priority management systems in which communication interfaces have to connect hard-wired or perform communicate safety class conversion, and indirectly receive non-safety class device control instructions from the non-safety class system 41, such problems as connecting hard-wired across factory buildings and occupying cabinet space can be effectively avoided, project implementation and overall planning in controlling safe operation of nuclear power plant can be greatly facilitated.

In an embodiment, the priority management device 10 receives control instructions for systems of respective safety classes via the hard-wired interfaces 20, the safety class instruction interface 30 and the non-safety class communication interface 40, and performs priority management, specifically with a CPLD (Complex Programmable Logic Device). A plurality of hard-wired interfaces 20 are integrated on the priority management device 10, which is connected to the safety class instruction interface 30 through a hard-wired interface 20, and to the non-safety class communication interface 40 through a hard-wired interface 20, to ensure that the priority management device 10 can stably receive control instructions of each class.

In a practical application scenario, the safety class instruction interface 30 can be connected to a safety class system 31 in the nuclear power plant for receiving safety class control instructions from the safety class system 31. For example, the safety class instruction interface 30 can receive 1E class automatic or manual control instructions from a 1E (safety class of nuclear power plant equipment)-DCS (Distributed Control System) system. The non-safety class communication interface 40 can be connected to the non-safety class system 41 in the nuclear power plant for receiving non-safety class device level manual control instructions from the non-safety class system 41. For example, the non-safety class communication interface 40 can receive NC-DCS device level manual control instructions from an NC (non-safety class of nuclear power plant equipment)-DCS system. The hard-wired interfaces 20 can be connected to other systems or field devices in the nuclear power plant and receive associated control instructions. For example, the hard-wired interfaces 20 can receive diversity backup instructions from a diversity backup system, or receive severe post-accident instructions from a severe post-accident driving system.

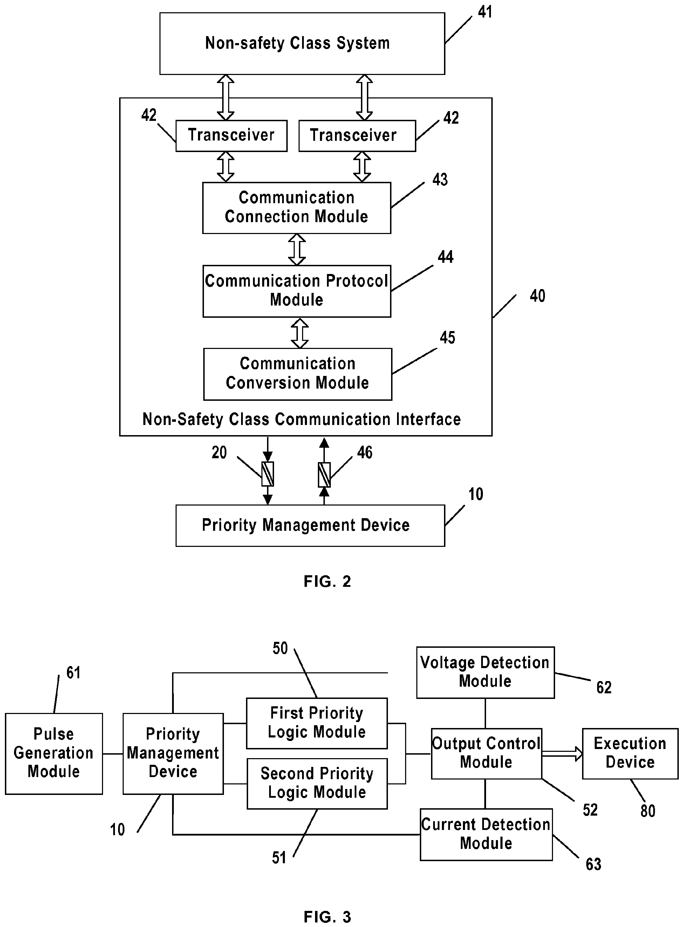

As shown in FIG. 2, in the priority management system of the present embodiment, the non-safety class communication interface 40 includes two (or more than two) identical transceivers 42. The two identical transceivers 42 are connected with the non-safety class system 41, configured for receiving non-safety class device level control instructions from the non-safety class system 41.

The two transceivers 42 have the same structure and are connected in parallel to the non-safety class system 41, which is equivalent to establishing a physical layer channel of parallel redundant communication links between the non-safety class communication interface 40 and the non-safety class system 41 through the two transceivers 42. When one transceiver 42 fails on its own or the connection line fails, the other transceiver 42 can be used to ensure that the non-safety class communication interface 40 can stably receive non-safety class device level control instructions.

Preferably, the non-safety class communication interface 40 further includes a communication connection module 43, which is connected between a hard-wired interface 20 corresponding to the non-safety class communication interface 40 and the two transceivers 42, configured for transmitting non-safety class device level control instructions received from one of the two transceivers 42 to the priority management device 10.

Specifically, the communication connection module 43 is communicatively connected to the two transceivers 42 respectively and establishes a communication connection with the hard-wired interfaces 20, configured for receiving non-safety class device level control instructions from the two transceivers 42 and transmitting the received non-safety class device level control instructions to the priority management device 10 via the hard-wired interface 20. The communication connection module 43 determines whether the two transceivers 42 have transmitted non-safety class device level control instructions. If the two transceivers 42 have transmitted non-safety class device level control instructions, non-safety class device level control instructions received from one of the two transceivers 42 are selected and sent to the hard-wired interface 20; if only one of the transceivers 42 has transmitted non-safety class device level control instructions, the received non-safety class device level control instructions are sent to the hard-wired interface 20. For example, the communication connection module 43 may be a CPLD chip integrated with "and/or" logic.

Preferably, the non-safety class communication interface 40 further includes a communication conversion module 45. The communication conversion module 45 is connected between a hard-wired interface 20 corresponding to the non-safety class communication interface 40 and the communication connection module 43, and is configured for receiving non-safety class device level control instructions from the communication connection module 43 and converting its format to a format corresponding to the hard-wired interface 20, and then transmitting the converted non-safety class device level control instructions to the priority management device 10 through the hard-wired interface 20. For example, the communication conversion module 45 may be an MCU (Microcontroller Unit or Single Chip Micyoco) integrated with the above communication and conversion functions.

In addition, the non-safety class communication interface 40 may further include a communication protocol module 44. The communication protocol module 44 is connected between the communication connection module 43 and the communication conversion module 45, and is configured for receiving non-safety class device level control instructions from the communication connection module 43, and transmitting the non-safety class device level control instructions to the communication conversion module 45 according to a set communication protocol. For example, the communication protocol module may be a DP (Decentralized Periphery) communication protocol chip, which is used to implement data link layer parsing and cache processing of the DP communication protocol, and the DP communication protocol is utilized to ensure stable and fast transmission of non-safety class device level control instructions.

Preferably, the priority management device 10 is further connected with the non-safety class communication interface 40 via a feedback module 46, for transmitting unidirectional feedback signals to the non-safety class communication interface 40.

The priority management device 10 receives the non-safety class device level control instructions from the non-safety class communication interface 40 via the hard-wired interface 20, and after the priority management is performed, a status feedback signal is fed back to the non-safety class communication interface 40 through the feedback module 46. For example, the feedback module 46 can receive the status feedback signal from the priority management device 10 based on a SPI (Serial Peripheral Interface) communication method, and send the status feedback signal to the non-safety class communication interface 40. Accordingly, the status feedback signal is sequentially transmitted to the communication conversion module 45, the communication protocol module 44, the communication connection module 43 and the transceivers 42, and is fed back to the non-safety class system 41 through the transceivers 42.

Preferably, the hard-wired interfaces 20 and the safety class instruction interface 30 are both provided with a signal isolation unit therein for electrical isolation, communication isolation or functional isolation in signals transmission. For example, the hard-wired interfaces 20 in the present embodiment is designed with a one-way isolation signal interface to meet isolation requirements of automatic control instructions or device level control instructions for respective safety class, thereby improving the reliability of the priority management system.

In the present embodiment, the priority management device 10 is further connected with a first priority logic module 50 and a second priority logic module 51, the first priority logic module 50 and the second priority logic module 51 being identical. The first priority logic module 50 and the second priority logic module 51 are connected to an execution device 80, and the priority management device 10 outputs control instructions to the execution device 80 through the first priority logic module 50 or the second priority logic module 51.

The first priority logic module 50 and the second priority logic module 51 form a parallel, redundant priority logic, in other words, the priority management system performs priority management logic with redundant hardware, which can effectively ensure the stable output of the control instructions, increase reliability of priority management, and effectively avoid software common cause failure.

For example, the priority management device 10 performs priority management on automatic control instructions collected through a first hard-wired interface 20, or 1E-class automatic control instructions collected through the safety class instruction interface 30, or the NC-DCS device level manual control instructions collected through the non-safety class communication interface 40. Then, the preferred control instructions are sent to the first priority logic module 50 and the second priority logic module 51, respectively, and the control instructions are output to the execution device 80 though the first priority logic module 50 or the second priority logic module 51.

As shown in FIG. 3, an output control module 52 is connected between the first priority logic module 50 as well as the second priority logic module 51 and the execution device 80. The output control module may receive the control instructions sent by one of the first priority logic module 50 and the second priority logic module 51 according to an "and/or" logic, and output the control instructions to the execution device 80. The first priority logic module 50 and the second priority logic module 51 may be a CPLD (Complex Programmable Logic Device) or a logic circuit with identical priority logic integrated therein.

Preferably, the priority management system according to the present embodiment further includes a safety self-diagnosis device 60. The safety self-diagnosis device 60 is connected to the priority management device 10, and is configured for performing detection and diagnosis on the control signal output by the priority management device to ensure that the control signal does not cause malfunction of the execution device 80, further to control the nuclear power plant to operate in a safe state and to enhance reliability of the priority management system.

In an optional embodiment, as shown in FIG. 3, the safety self-diagnosis device 60 includes an output drive loop detection module connected with the priority management device 10. The output drive loop detection module specifically includes a pulse generation module 61, a voltage detection module 62, and a current detection module 63. The pulse generation module 61 is connected with the priority management device 10, and is configured for transmitting a pulse enable signal of 1 ms to the priority management device 10, and driving the priority management device 10 to actively output an experimental control instruction of 1 ms. The voltage detection module 62 and the current detection module 63 are respectively connected with the priority management device 10, and are connected with the output control module 52 which connects with the first priority logic module 50 as well as the second priority logic module 51 and the execution device 80. The voltage detection module 62 and the current detection module 63 are configured for detecting voltage and current on the experimental control instruction received from the priority logic module 50 and the second priority logic module 51, and send detection results to priority management device 10 for state readback detection. If the detection results indicate that the experimental control instruction is the expected control instruction, the control signal output by the priority management device 10 is determined to be normal, and the priority management device 10 can continue outputting control instructions to the execution device 80. If the detection results indicate that the experimental control instruction is different from the expected control instruction, the control signal output by the priority management device 10 is determined to be incorrect. The loop of the priority management device 10 outputting the control instruction breaks, and the priority management device 10 cannot continue outputting control instructions to the execution device 80, so that malfunctions of the execution device 80 affecting safe operations of the nuclear power plant can be avoided.

Of course, in other embodiments, the safety self-diagnosis device 60 may further include a fault collection diagnosis module connected with the priority management device 10. The fault collection diagnosis module is connected with the priority management device 10 through a communication interface or a communication input (for example, the above-mentioned plurality of hard-wired interfaces 20), and performs fault diagnosis on the control instructions collected by the priority management device 10.

In addition, the priority management system according to the present embodiment further includes an indicator light 70 which is connected with the priority management device 10 for indicating working state information of the priority management device 10. For example, the indicator light 70 may indicate power status information, fault status information, communication link status information, control instructions output status information, etc. by displaying different setting colors, so as to facilitate working staff in obtaining the information indicated by the indicator light 70.

The nuclear power plant priority management system according to embodiments of the invention integrates hard-wired interfaces, a safety class communication interface and a non-safety class communication interface on a priority management device as a communication interface of the priority management system, thereby facilitating the system in its receiving control instructions from different safety class systems and improving the engineering applicability of the system. Further, the non-safety communication interface can directly connect with non-safety class systems, and can establish a redundant communication link to ensure steady reception of non-safety class device level control instructions, and to ensure stable and fast transmission of non-safety class device level control instructions through hard-wired interfaces and communication method. Consequently, connection of a large amount of hardwire can be avoided, and usability in engineering implementation of the system is greatly improved.

Next, with priority management logic implemented by redundant hardware, the priority management device can stably output the control instructions, increasing reliability of the priority management system.

Still next, with a self-diagnosis device performing fault detection on the input or output control instructions by the priority management device, outputting fault control instructions that cause the malfunction of the execution device may be avoided, so that reliability and safety of the system is improved, and the nuclear power plant can be controlled to operate in a safe state.

It should be noted that the components described in the present application can be split into more components, or two or more components or partial operations of the components can be combined into new components to achieve the object of the present disclosure, as required in implementation.

The foregoing descriptions are merely specific embodying modes of the present disclosure, but the protection scope of the present disclosure is not limited thereto. Any changes or substitutions that can be easily conceived by those skilled in the art within the technical scope disclosed by the present disclosure shall fall within the protection scope of the present disclosure. Therefore, the protection scope of the present disclosure shall be defined as claimed in the claims.

## Claims

1. A nuclear power plant priority management system, comprising a priority management device (10), the priority management device being connected via first hard-wired interfaces (20) with
a safety class instruction interface (30), the safety class instruction interface being configured for connecting with a safety class system (31) and receiving safety class control instructions from the safety class system;
the priority management device (10) is further connected with a non-safety class communication interface (40) via second hard-wired interfaces (20), the non-safety class communication interface (40) being configured for connecting with a non-safety class system (41) and receiving non-safety class device level control instructions from the non-safety class system (41) and for transmitting the non-safety class device level control instructions to the priority management device (10) via the second hard-wired interfaces (20).

2. The nuclear power plant priority management system according to claim 1, wherein the non-safety class communication interface (40) comprises at least two identical transceivers (42), the at least two transceivers (42) being connected with the non-safety class system (41) and being configured for receiving the non-safety class device level control instructions from the non-safety class system (41).

3. The nuclear power plant priority management system according to claim 2, wherein the non-safety class communication interface (40) further comprises a communication connection module (43), the communication connection module (43) being connected between a hard-wired interface (20) corresponding to the non-safety class communication interface (40) and the at least two transceivers (42), and being configured for transmitting the non-safety class device level control instructions received from one of the at least two transceivers (42) to the priority management device (10) via the corresponding hard-wired interface (20).

4. The nuclear power plant priority management system according to claim 3, wherein the non-safety class communication interface (40) further comprises a communication conversion module (45), the communication conversion module (45) being connected between a hard-wired interface (20) corresponding to the non-safety class communication interface (40) and the communication connection module (43), and being configured for converting a format of the non-safety class device level control instructions received from the communication connection module (43) to a corresponding format of the corresponding hard-wired interface (20) and transmitting the format converted non-safety class device level control instructions to the priority management device (10) via the corresponding hard-wired interface (20).

5. The nuclear power plant priority management system according to claim 4, wherein the non-safety class communication interface (40) further comprises a communication protocol module (44), which is connected between the communication conversion module (45) and the communication connection module (43), and is configured for transmitting the non-safety class device level control instructions received from the communication connection module (43) to the communication conversion module (45) according to a set communication protocol.

6. The nuclear power plant priority management system according to claim 1, wherein the priority management device (10) is further connected with the non-safety class communication interface (40) through a feedback module (46) for transmitting feedback signals in one direction.

7. The nuclear power plant priority management system according to any one of claims 1 to 6, wherein at least one of the hard-wired interfaces (20) and the safety class instruction interface (30) is provided with a signal isolation unit for electrical isolation and/or communication isolation of signals.

8. The nuclear power plant priority management system according to any one of claims 1 to 7, wherein the priority management device (10) is further connected with a first priority logic module (50) and a second priority logic module (51), the first priority logic module (50) and the second priority logic module (51) being connected with an execution device (80);
the priority management device (10) outputs control instructions to the execution device (80) via one of the first priority logic module (50) and the second priority logic module (51).

9. The nuclear power plant priority management system according to claim 8, wherein the priority management system further comprises a safety self-diagnosis device (60);
the safety self-diagnosis device (60) comprises an output drive loop detection module connected with the priority management device (10), the output drive loop detection module comprising a voltage detection module (62) and/or a current detection module (63) connected with the priority management device (10) as well as a pulse generation module (61) connected with the priority management device (10), the voltage detection module (62) and/or a current detection module (63) also being connected with the output control module (52) which is connected between the first priority logic module (50) as well as the second priority logic module (51) and the execution device (80); and/or,
the safety self-diagnosis device (60) comprises a fault collection and diagnosis module connected with the priority management device (10).

10. The nuclear power plant priority management system according to any one of claims 1 to 9, wherein the priority management system further comprises an indicator light (70), which is connected with the priority management device (10), and is configured for indicating working status information of the priority management device (10).

## Patentansprüche

1. Prioritätsmanagementsystem für Kernkraftwerke, umfassend eine Prioritätsmanagementvorrichtung (10), wobei die Prioritätsmanagementvorrichtung mittels erster festverdrahteter Schnittstellen (20) mit einer Sicherheitsklassen-Befehlsschnittstelle (30) verbunden ist, wobei die Sicherheitsklassen-Befehlsschnittstelle dazu konfiguriert ist, mit einem Sicherheitsklassensystem (31) verbunden zu sein und Sicherheitsklassenkontrollinstruktionen von dem Sicherheitssystem zu empfangen;
die Prioritätsverwaltungsvorrichtung (10) ist weiterhin über zweite festverdrahtete Schnittstellen (20) mit einer Kommunikationsschnittstelle (40) einer Nicht-Sicherheitsklasse verbunden, wobei die Kommunikationsschnittstelle (40) der Nicht-Sicherheitsklasse dazu konfiguriert ist, mit einem Nicht-Sicherheitsklassensystem (41) verbunden zu sein und Nicht-Sicherheitsklassen-Kontrollinstruktionen auf Geräteebene von dem Nicht-Sicherheitsklassensystem (41) zu empfangen und Nicht-Sicherheitsklassen-Kontrollinstruktionen auf Geräteebene an die Prioritätsverwaltungsvorrichtung (10) über die zweiten festverdrahteten Schnittstellen (20) zu senden.

2. Prioritätsmanagementsystem für Kernkraftwerke nach Anspruch 1, wobei die Kommunikationsschnittstelle (40) der Nicht-Sicherheitsklasse mindestens zwei identische Transceiver (42) umfasst, wobei die mindestens zwei Transceiver (42) mit dem Nicht-Sicherheitsklassensystem (41) verbunden und derart konfiguriert sind, dass sie die Nicht-Sicherheitsklassen-Kontrollinstruktionen auf Geräteebene von dem Nicht-Sicherheitsklassensystem (41) empfangen.

3. Prioritätsmanagementsystem für Kernkraftwerke nach Anspruch 2, wobei die Nicht-Sicherheitsklassen-Kommunikationsschnittstelle (40) weiterhin ein Kommunikationsverbindungsmodul (43) umfasst, wobei das Kommunikationsverbindungsmodul (43) zwischen einer festverdrahteten Schnittstelle (20), die der Nicht-Sicherheitsklassen-Kommunikationsschnittstelle (40) entspricht, und den mindestens zwei Transceivern (42) verbunden ist und derart konfiguriert ist, dass es die von einem der mindestens zwei Transceiver (42) empfangenen Nicht-Sicherheitsklassen-Kontrollinstruktionen auf Geräteebene über die entsprechende festverdrahtete Schnittstelle (20) an die Prioritätsverwaltungsvorrichtung (10) überträgt.

4. Prioritätsmanagementsystem für Kernkraftwerke nach Anspruch 3, wobei die Kommunikationsschnittstelle (40) der Nicht-Sicherheitsklasse weiterhin ein Kommunikationskonvertierungsmodul (45) umfasst, wobei das Kommunikationskonvertierungsmodul (45) zwischen einer festverdrahteten Schnittstelle (20), die der Kommunikationsschnittstelle (40) der Nicht-Sicherheitsklasse entspricht, und dem Kommunikationsverbindungsmodul (43) verbunden ist und derart konfiguriert ist, dass es ein Format der von dem Kommunikationsverbindungsmodul (43) empfangenen Nicht-Sicherheitsklassen-Kontrollinstruktionen auf Geräteebene in ein entsprechendes Format der entsprechenden festverdrahteten Schnittstelle (20) umwandelt und die formatumgewandelten Nicht-Sicherheitsklassen-Kontrollinstruktionen auf Geräteebene über die entsprechende festverdrahtete Schnittstelle (20) an die Prioritätsverwaltungsvorrichtung (10) überträgt.

5. Prioritätsmanagementsystem für Kernkraftwerke nach Anspruch 4, wobei die Kommunikationsschnittstelle (40) der Nicht-Sicherheitsklasse weiterhin ein Kommunikationsprotokollmodul (44) umfasst, das zwischen dem Kommunikationsumwandlungsmodul (45) und dem Kommunikationsverbindungsmodul (43) verbunden ist und derart konfiguriert ist, dass es die von dem Kommunikationsverbindungsmodul (43) empfangenen Nicht-Sicherheitsklassen-Kontrollinstruktionen auf Geräteebene gemäß einem festgelegten Kommunikationsprotokoll an das Kommunikationsumwandlungsmodul (45) überträgt.

6. Prioritätsmanagementsystem für Kernkraftwerke nach Anspruch 1, wobei die Prioritätsmanagementvorrichtung (10) weiterhin mit der Kommunikationsschnittstelle (40) der Nicht-Sicherheitsklasse über ein Rückkopplungsmodul (46) zum Übertragen von Rückkopplungssignalen in einer Richtung verbunden ist.

7. Prioritätsmanagementsystem für Kernkraftwerke nach einem der Ansprüche 1 bis 6, wobei mindestens eine der festverdrahteten Schnittstellen (20) und die Sicherheitsklassen-Befehlsschnittstelle (30) mit einer Signalisolierungseinheit zur elektrischen Isolierung und/oder Kommunikationsisolierung von Signalen versehen ist.

8. Prioritätsmanagementsystem für Kernkraftwerke gemäß einem der Ansprüche 1 bis 7, wobei die Prioritätsmanagementvorrichtung (10) weiterhin mit einem ersten Prioritätslogikmodul (50) und einem zweiten Prioritätslogikmodul (51) verbunden ist, wobei das erste Prioritätslogikmodul (50) und das zweite Prioritätslogikmodul (51) mit einer Ausführungsvorrichtung (80) verbunden sind;
die Prioritätsverwaltungseinrichtung (10) Kontrollinstruktionen an die Ausführungseinrichtung (80) über eines von dem ersten Prioritätslogikmodul (50) und dem zweiten Prioritätslogikmodul (51) ausgibt.

9. Prioritätsmanagementsystem für Kernkraftwerke gemäß Anspruch 8, wobei das Prioritätsmanagementsystem weiterhin eine Sicherheitsselbstdiagnoseeinrichtung (60) umfasst,
die Sicherheitsselbstdiagnosevorrichtung (60) ein mit der Prioritätsmanagementvorrichtung (10) verbundenes Ausgangsantriebsschleifen-Erfassungsmodul umfasst, wobei das Ausgangsantriebsschleifen-Erfassungsmodul ein Spannungserfassungsmodul (62) und/oder ein Stromerfassungsmodul (63), die mit der Prioritätsmanagementvorrichtung (10) verbunden sind, sowie ein Impulserzeugungsmodul (61) das mit der Prioritätsmanagementvorrichtung (10) verbunden ist, umfasst, wobei das Spannungserfassungsmodul (62) und/oder ein Stromerfassungsmodul (63) auch mit dem Ausgangssteuermodul (52) verbunden ist, das zwischen dem ersten Prioritätslogikmodul (50) sowie dem zweiten Prioritätslogikmodul (51) und der Ausführungsvorrichtung (80) verbunden ist; und/oder
die Sicherheitsselbstdiagnosevorrichtung (60) ein mit der Prioritätsmanagementvorrichtung (10) verbundenes Fehlersammel- und Diagnosemodul umfasst.

10. Prioritätsmanagementsystem für Kernkraftwerke gemäß einem der Ansprüche 1 bis 9, wobei das Prioritätsmanagementsystem weiterhin eine Anzeigeleuchte (70) umfasst, die mit der Prioritätsmanagementvorrichtung (10) verbunden ist und derart konfiguriert ist, dass sie Betriebsstatusinformationen der Prioritätsmanagementvorrichtung (10) anzeigt.

## Revendications

1. Système de gestion de priorités de centrale nucléaire, comprenant un dispositif de gestion de priorités (10), le dispositif de gestion de priorités étant connecté par l'intermédiaire de premières interfaces câblées (20) à une interface d'instruction de classe de sécurité (30), l'interface d'instruction de classe de sécurité étant configurée pour se connecter à un système de classe de sécurité (31) et recevoir des instructions de commande de classe de sécurité en provenance du système de classe de sécurité;
le dispositif de gestion de priorités (10) est en outre connecté à une interface de communication de classe de non-sécurité (40) par l'intermédiaire de deuxièmes interfaces câblées (20), l'interface de communication de classe de non-sécurité (40) étant configurée pour se connecter à un système de classe de non-sécurité (41) et recevoir des instructions de commande de niveau de dispositif de classe de non-sécurité en provenance du système de classe de non-sécurité (41) et pour transmettre les instructions de commande de niveau de dispositif de classe de non-sécurité au dispositif de gestion de priorités (10) par l'intermédiaire des deuxièmes interfaces câblées (20).

2. Système de gestion de priorités de centrale nucléaire selon la revendication 1, dans lequel l'interface de communication de classe de non-sécurité (40) comprend au moins deux émetteurs-récepteurs identiques (42), lesdits deux émetteurs-récepteurs (42) étant connectés au système de classe de non-sécurité (41) et étant configurés pour recevoir les instructions de commande de niveau de dispositif de classe de non-sécurité en provenance du système de classe de non-sécurité (41).

3. Système de gestion de priorités de centrale nucléaire selon la revendication 2, dans lequel l'interface de communication de classe de non-sécurité (40) comprend en outre un module de connexion de communication (43), le module de connexion de communication (43) étant connecté entre une interface câblée (20) correspondant à l'interface de communication de classe de non-sécurité (40) et lesdits deux émetteurs-récepteurs (42), et étant configuré pour transmettre les instructions de commande de niveau de dispositif de classe de non-sécurité reçues en provenance de l'un desdits deux émetteurs-récepteurs (42) au niveau du dispositif de gestion de priorités (10) par l'intermédiaire de l'interface câblée correspondante (20).

4. Système de gestion de priorités de centrale nucléaire selon la revendication 3, dans lequel l'interface de communication de classe de non-sécurité (40) comprend en outre un module de conversion de communication (45), le module de conversion de communication (45) étant connecté entre une interface câblée (20) correspondant à l'interface de communication de classe de non-sécurité (40) et le module de connexion de communication (43), et étant configuré pour convertir un format des instructions de commande de niveau de dispositif de classe de non-sécurité reçues en provenance du module de connexion de communication (43) en un format correspondant de l'interface câblée correspondante (20) et transmettre les instructions de commande de niveau de dispositif de classe de non-sécurité converties en format au dispositif de gestion de priorités (10) par l'intermédiaire de l'interface câblée correspondante (20).

5. Système de gestion de priorités de centrale nucléaire selon la revendication 4, dans lequel l'interface de communication de classe de non-sécurité (40) comprend en outre un module de protocole de communication (44), qui est connecté entre le module de conversion de communication (45) et le module de connexion de communication (43), et est configuré pour transmettre les instructions de commande de niveau de dispositif de classe de non-sécurité reçues en provenance du module de connexion de communication (43) au niveau du module de conversion de communication (45) selon un protocole de communication défini.

6. Système de gestion de priorités de centrale nucléaire selon la revendication 1, dans lequel le dispositif de gestion de priorités (10) est en outre connecté à l'interface de communication de classe de non-sécurité (40) par l'intermédiaire d'un module de rétroaction (46) pour transmettre des signaux de rétroaction dans une direction.

7. Système de gestion de priorités de centrale nucléaire selon l'une quelconque des revendications 1 à 6, dans lequel au moins l'une des interfaces câblées (20) et l'interface d'instruction de classe de sécurité (30) est pourvue d'une unité d'isolation de signal pour une isolation électrique et/ou une isolation de communication de signaux.

8. Système de gestion de priorités de centrale nucléaire selon l'une quelconque des revendications 1 à 7, dans lequel le dispositif de gestion de priorités (10) est en outre connecté à un premier module logique de priorité (50) et à un deuxième module logique de priorité (51), le premier module logique de priorité (50) et le deuxième module logique de priorité (51) étant connectés à un dispositif d'exécution (80);
le dispositif de gestion de priorités (10) transmet des instructions de commande au dispositif d'exécution (80) par l'intermédiaire du premier module logique de priorité (50) et du deuxième module logique de priorité (51).

9. Système de gestion de priorités de centrale nucléaire selon la revendication 8, dans lequel le système de gestion de priorités comprend en outre un dispositif d'autodiagnostic de sécurité (60);
le dispositif d'autodiagnostic de sécurité (60) comprend un module de détection de boucle de commande de sortie connecté au dispositif de gestion de priorités (10), le module de détection de boucle de commande de sortie comprenant un module de détection de tension (62) et/ou un module de détection de courant (63) connecté au dispositif de gestion de priorités (10) ainsi qu'un module de génération d'impulsions (61) connecté au dispositif de gestion de priorités (10), le module de détection de tension (62) et/ou un module de détection de courant (63) étant également connectés au module de commande de sortie (52) qui est connecté entre le premier module logique de priorité (50) ainsi que le deuxième module logique de priorité (51) et le dispositif d'exécution (80); et/ou,
le dispositif d'autodiagnostic de sécurité (60) comprend un module de collecte et de diagnostic de défaut connecté au dispositif de gestion de priorités (10).

10. Système de gestion de priorités de centrale nucléaire selon l'une quelconque des revendications 1 à 9, dans lequel le système de gestion de priorités comprend en outre un voyant lumineux (70), qui est connecté au dispositif de gestion de priorités (10), et est configuré pour indiquer des informations sur l'état de fonctionnement du dispositif de gestion de priorités (10).
